# EUROPEAN PATENT SPECIFICATION

(11) **EP 2 478 307 B1**
(45) Date of publication and mention of the grant of the patent: **20.04.2016**
(21) Application number: 10755247.3
(22) Date of filing: 17.08.2010
(51) Int. Cl.: F24J 2/05

(54) **SOLAR COLLECTOR**
SONNENKOLLEKTOR
CAPTEUR SOLAIRE

(30) Priority: 21.08.2009 IE 20090637
(43) Date of publication of application: 25.07.2012
(73) Proprietor: Kingspan Holdings (IRL) Limited, Kingscourt County Cavan (IE)
(72) Inventor: PELAN, Richard, Northern ireland (GB); McENTEE, Paul Thomas, Northern ireland (GB); DAVIS, Patrick Robert, Northern Ireland (GB)
(74) Representative: Lane, Cathal Michael
(86) International application number: PCT/IE2010/000050
(87) International publication number: WO 2011/021172

(56) References cited:
- EP-A2- 1 273 854
- WO-A1-02/059531
- GB-A- 2 449 766

## Description

### Introduction

The invention relates to a solar collector for converting solar radiation into heat and to transfer the latter with the maximum possible efficiency to a fluid heat transferring means (e.g. water or air) whereby the heat can be utilised in a domestic or industrial application, for example to heat a domestic hot water or central heating system.

A solar collector typically comprises a number of elongate tubes containing a radiation absorbing plate for absorbing solar radiation in contact with a pipe through which the fluid to be heated can be passed or within which is contained a working fluid for transferring heat to the fluid to be heated. The radiation absorbing plate and at least a portion of the pipe are enclosed within an evacuated radiation transparent enclosure to prevent heat loss.

In one type of solar collector, known as the direct flow type, the fluid to be heated flows through the pipe in contact with the plate for direct conduction of heat between the plate and the fluid.

In an alternative type of solar collector, known as the heat pipe type, the pipe forms a closed chamber and contains a working fluid, the pipe defining an evaporator section, in thermal contact with said radiation absorbing plate, and a condenser section remote from said plate, said plate and said evaporator section of said elongate tube being enclosed within the evacuated radiation transparent enclosure to prevent heat loss. The condenser section is placed in thermal contact with the fluid to be heated to allow heat transfer between the working fluid and the fluid to be heated.

The heat pipe type of collector utilises the phase change of the working fluid to achieve greater efficiency. The energy which is required for the flow of the working fluid is provided by gravity so that no external pumping source is necessary. A known heat pipe type solar collector is disclosed in GB2103350.

Both types of solar collector further comprise a heat collection manifold containing a fluid to be heated and having at least one solar tube receiving aperture therein for insertion of on end of each elongate tube to enable the fluid to be heated to pass into and out of the pipe of each elongate tube, in the case of the direct flow type, or to permit heat transfer between the working fluid within the condenser section of the pipe and the fluid to be heated in the case of the heat pipe type. The manifold is typically provided with inlet and outlet connections.

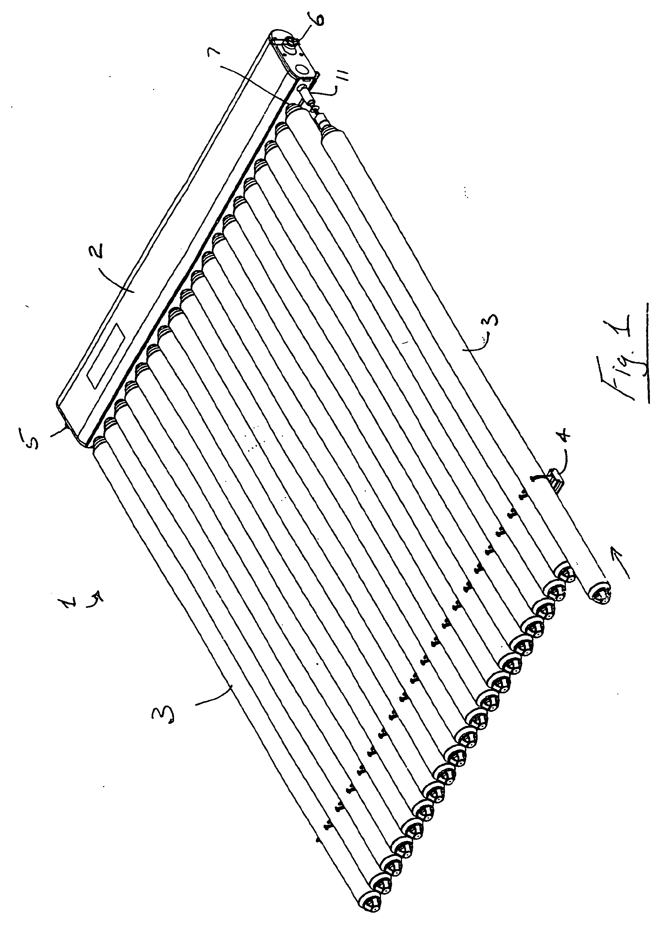

The separate elongate tubes and the heat collection manifold of the solar collector need to be capable of being readily assembled on site and designed so that they are capable of taking up the tolerances which are usual in this field of the technology without risk of damage or leakages. In addition, it is necessary that these component parts be easily replaceable. Traditional solar collector manifold typically has a fixed number of receiving apertures as shown in Fig.1. A traditional solar collector 1 comprises a manifold housing 2, a plurality of elongate tubes 3 and a support structure 4. The manifold is typically provided with an inlet port 5 and an outlet port 6 to allow the flow of the fluid to be heated. A plurality of inlet apertures 7 is also provided to allow the insertion of the elongate tubes 3 into the manifold 2. The restrictive design of such traditional solar thermal collectors has limited the flexibility of the solar collector for various applications. Significant redesign of the heat collection manifold 2 is typically required in order to provide systems of variable size and energy generating capability. Traditional manifolds are fixed in their dimensions and the number of solar tubes that they can accommodate.

In order to address the limitations of such collector design the patent application GB 2449766 A, which discloses a solar collector according to the preamble of claim 1 provides a solution that is sufficiently flexible to allow a collector to be constructed with any number of solar tubes and the size of which is not limited to the design and construction of the manifold.

The benefits of such an approach mean that the collector can be more accurately sized for its specific application or to fit confined or unusual spaces.

The aim of the present invention is to provide a solar collector having a high efficiency and which can be constructed cheaply.

### Statements of Invention

According to the invention there is provided a modular solar collector comprising at least one elongate tube, said at least one elongate tube including means for absorbing solar radiation, means for transferring heat from said heat absorbing means to a fluid to be heated and an end fitting providing fluid connection means for connecting with a corresponding end fitting of an adjacent elongate tube to permit passage of fluid between the end fittings without requiring a separate manifold, the end fitting comprising a fluid passageway, the end fitting being adapted to sealingly engage a similar passageway of an adjacent end fitting, the passageway being divided by a longitudinally extending dividing wall into a cold fluid passageway for a cold fluid stream and a hot fluid passageway for a hot fluid stream wherein the dividing wall is a separate component which is mounted in the passageway.

By making the dividing wall as a separate component, the manufacturing cost of the end fitting can be reduced.

In one embodiment the end fitting comprises mounting means for the dividing wall. The mounting means may comprise a mechanical mounting means.

In one case the mounting means comprises a receiver for reception of the dividing wall.

The receiver may comprise a longitudinal part which extends longitudinally along the end fitting. The longitudinal part may comprise an elongate slot extending along at least a portion of the end fitting. In one case the receiver comprises a pair of appositely directed elongate slots. Such an arrangement facilitates ease of insertion of the dividing wall, on assembly, and provides a highly efficient mounting means.

In one embodiment the receiver comprises a transverse part which extends transversely at least partially across the end fitting.

The transverse part may comprise a support which extends transversely across the end fitting. There may be a pair of supports which are spaced-apart to define transverse receiving slot therebetween. Such an arrangement facilitates ease of insertion and mounting of the dividing wall. The transverse part also provides enhanced stability.

The transverse part may be located at one end of the fitting.

In one case the end fitting is of a rigid plastics material and the dividing wall is also of a rigid plastic material.

In one embodiment the dividing wall comprises an opening through which a hot fluid pipe of the solar collector tube extends for delivery of hot fluid from the solar collector tube into the hot fluid passageway.

In one embodiment the dividing wall is removable from the fitting. This arrangement facilitates assembly / disassembly.

In one embodiment the solar collector has parallel hydraulic flow.

In one case the end fitting comprises a fluid passageway, the end fitting being adapted to sealingly engage a similar passageway of an adjacent end fitting.

Preferably the end fitting comprises a seal for sealing engaging the passageways of adjacent end fittings. The end fitting may comprise a groove or recess for receiving an O-ring seal.

In one embodiment the end fitting comprises a receiving portion for receiving an end of a fluid flow pipe of a solar collector tube or a condenser section of a solar collector tube. The receiving portion may extend substantially orthogonally to the fluid passageway.

The invention also provides a solar collector assembly comprising a plurality of end fittings joined together, an end fitting at one end of the assembly comprises a first blocking means for blocking one of the passageways and an end fitting at an opposite end of the assembly comprises a second blocking means for blocking the other of the passageways.

In one case the receiving section is adapted for sealingly engaging with an end of a fluid flow pipe or a condenser section of a solar collector tube.

The receiving section may comprise a smooth face for engaging a seal or a seal for sealing engaging with an end of a fluid flow pipe of a solar collector tube. The seal may comprise an O-ring. The receiving section may be adapted for sealing engagement with a sealing plug of a condenser section of a solar collector tube.

The cold fluid passageway is preferably in fluid communication with a cold fluid pipe of the solar collector tube.

In a preferred embodiment, on assembly of one end fitting to an adjacent similar end fitting, the dividing walls of the end fittings are substantially contiguous.

The dividing wall facilitates the parallel flow of thermal fluid when adjacent end fittings are engaged together.

In one embodiment the solar collector is provided with a cold fluid passageway seal and a hot fluid passageway seal that engage at opposite ends of the collector array assembly to block the respective passageways.

In one embodiment the hydraulic flow of fluid is in parallel and simultaneous through all solar collector tubes in a collector array assembly.

In one embodiment the solar collector comprises a protective casing for receiving the end fitting and an end of the solar collector tube. The end fitting and/or the end of the solar collector tube are preferably releasably engageable in the protective casing.

In one case the protective casing comprises a main protector body and a closure part which is movably mounted to or removable from the main protector body. Preferably the protective casing comprises a hinged or pivotal lid part.

In one embodiment the protective enclosure has an end capping. The end capping may comprise a first part and a second part which are movable relative to one another from an open configuration (to receive an end fitting) to a closed configuration. The second part may be hingedely mounted to the first part for movement between the open and closed configurations.

In one embodiment the protective casing comprises a receiver for receiving a locking clip for securely mounting the solar collector tube and/or the associated end fitting in the protective housing.

The protective casing may comprise a support structure. The support structure may be integral with the protective housing.

In one case the support structures of adjacent protective casings are interlinkable. Adjacent support structures may be interlocked by an interlink component. At least part of the interlink component may be integral with the support structure. The interlink component may be separate or separable from the support structure.

The invention also provides a solar collector assembly comprising a plurality of similar solar collectors of the invention.

According to the invention there is provided a solar collector comprising at least one elongate tube, said at least one elongate tube including means for absorbing solar radiation, means for transferring heat from said heat absorbing means to a fluid to be heated and fluid connection means for connection with corresponding fluid connection means of an adjacent elongate member and / or to an inlet or outlet conduit to permit passage of said fluid to be heated between adjacent elongate members without requiring a separate manifold.

Preferably said connection means is provided at one or both ends of each elongate member.

Preferably each elongate member includes connection means to enable the elongate member to be connected to a supporting structure.

Preferably each fluid connection means preferably includes one or more seal means, such as an o-ring or a compression fitting.

Preferably said absorbing means of each elongate tube comprises a radiation absorbing surface, such as a plate, enclosed within an evacuated radiation transparent enclosure formed from a radiation transparent material, such as glass.

Preferably the fluid connection means is formed on an end fitting provided on one or both ends of the evacuated tube of each elongate tube. Preferably said supporting structure connecting means are provided on each end fitting. In one embodiment said supporting structure connecting means comprises one or more channel sections arranged transverse to the longitudinal axis of each elongate tube.

In a preferred embodiment, the fluid connection means comprises a tubular opening adapted to sealingly engage a similar tubular opening on an adjacent elongate tube. Preferably said tubular opening includes a central dividing wall to divide said opening into an inlet and an outlet port. An o-ring seal may be provided between the tubular openings of adjacent elongate tubes to prevent fluid leakage.

In one embodiment, said radiation absorbing surface of each elongate member is in thermal contact with an elongate tube having at least one internal flow passageway for the flow of said fluid to be heated, said at least one internal flow passageway communicating with said fluid connection means.

Preferably said elongate tube includes a first passageway extending from a fluid inlet to a distal end of the tube and a second fluid passageway extending from said distal end to a fluid outlet adjacent to said fluid inlet. The first and second fluid passageways may be arranged concentrically or side by side, separated by an internal dividing wall within the elongate tube. Where the first and second fluid passageways are arranged concentrically, said first passageway, comprising an inlet passage, may be defined by an annular space between in and outer concentrically arranged pipes, and said second passageway, comprising an outlet passage, may be defined by the inner one of said concentrically arranged pipes.

The fluid connection means may be arranged such that the plurality of elongate tubes are connected in parallel, whereby a cold fluid inlet communicates with an inlet end of the first passageway of each elongate tube and a heated fluid outlet communicates with an outlet end of the second passageway of each elongate tube.

Preferably said connection means of each elongate member is defined by a tubular passage extending through said end fitting and being open on opposing sides of said end fitting to communicate with a corresponding passage of adjacent elongate member, said tubular passage having a central dividing wall dividing the passage into an inlet stream and an outlet stream, said first passageway of the elongate tube communicating with said inlet stream and said second passageway communicating with said outlet stream. Alternatively, the inlet stream and outlet stream may be defined by separate substantially parallel passageways extending through the end fitting.

In an alternative embodiment said radiation absorbing surface of each elongate member is in thermal contact with an evaporator section of a heat pipe comprising an elongate tube containing a heat transfer medium, a second section of said elongate tube, defining a condenser section of the heat pipe, being in thermal contact with a fluid chamber defined within said elongate member, preferably within said end fitting, and communicating with said fluid connection means to enable heat transfer between said fluid to be heated and said heat transfer medium.

In such embodiment, said fluid chamber of each elongate member may be defined by a passage extending through said end fitting having an opening at either end thereof to define said fluid connection means for fluid communication with a corresponding fluid chamber of adjacent elongate members, the condenser section of the elongate tube passing into or forming a wall portion of said fluid chamber to permit heat transfer between fluid within said chamber and a working fluid within said condenser section.

The present invention combines a number of previously separate components and therefore reduces the overall complexity of the solar collector resulting in lower cost and material usage without any compromise in the efficiency, ease of assembly and reliability of the solar collector.

### Brief Description of the Drawings

Preferred embodiments of the present invention will now be described, by way of example only, with reference to the accompanying drawings, in which:-
Fig. 1 is a perspective view of a prior art solar collector;
Fig. 2 is a cross-section of a solar collector tube of the direct flow type;
Fig. 3 is an exploded perspective view of an end fitting part of a solar collector of the invention;
Fig. 4 is a perspective view of the assembled end fitting of Fig. 3;
Fig. 5 is a longitudinal cut-away view of the end fitting of Fig. 4;
Fig. 6 is another longitudinal cut-away view of the end fitting of Fig. 4;
Fig. 7 is an exploded perspective view of part of the end fitting of Figs. 4 to 6;
Fig. 8 is a perspective view of the assembled end fitting part of Fig. 7;
Fig. 9 and 10 are perspective views of the part of Figs. 3 to 8 with a direct-flow type tube and an end fitting;
Fig. 11 is a cut-away view of two connected solar tube and end fittings for the direct flow type of tube;
Fig. 12 is a cut-away view of a connected solar tube and end fitting for the direct flow type of tube;
Fig. 13 is a planar cross-sectional view of the connected tube of the direct flow type with the end fitting;
Fig. 14 is an isometric view of two of the end fittings and tubes in a first embodiment of the connection technology;
Fig. 15 is a cut-away partially cross-sectional view of the end-fittings and tubes of Fig. 14;
Fig. 16 is a cross section of the two end fittings and tubes of Figs. 14 and 15;
Fig. 17 is a perspective view of two adjacent end fittings connected together with a resilient clip in place;
Fig. 18 is a perspective view of a single solar collector with a first embodiment of an outer protective casing;
Fig. 19 is an exploded view of a detail of Fig. 18;
Fig. 20 is an exploded view of another detail of Fig. 18;
Fig. 21 is an enlarged view of the outer protective casing part of Fig. 18;
Figs. 22 to 26 are perspective views illustrating the assembly of a tube and the protective casing of Fig. 18;
Figs. 27 to 29 are further perspective views illustrating the assembly of a tube and a protective casing;
Fig. 30 is a perspective view of a number of tubes with the connection technology of the invention when combined together;
Fig. 31 is a plan view of a number of tubes connected together with protective casings in place;
Fig. 32 is a cut-away view of two adjacent tubes connected together with protective casings in place;
Fig. 33 is a cross sectional view of the assembly of Fig. 32;
Figs. 34 is a view similar to Fig. 31 showing the tubes disconnected from each other;
Figs. 35 and 36 are perspective views of connected tubes with various brackets/mountings;
Fig. 37 is a cross sectional view of an assembly of several tubes and end fittings with end connectors in situ;
Fig. 38 is a schematic view illustrating fluid flow in the solar collector;
Fig. 39 is a perspective partially exploded view of a solar collector illustrating end fittings;
Fig. 40 is a perspective view of Fig. 39 assembled; and
Figs. 41 to 44 are cross sectional views illustrating the assembly of end fittings of the solar collector;

### Detailed Description

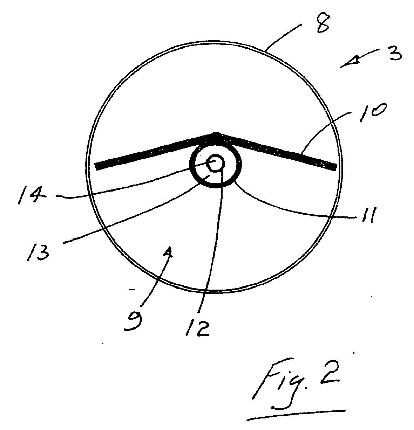

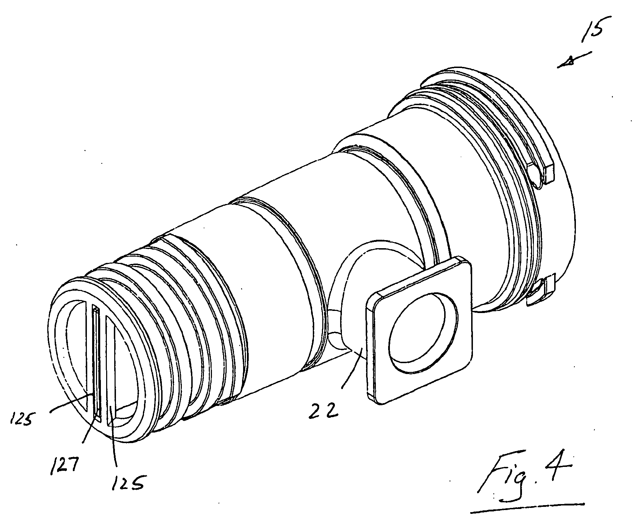

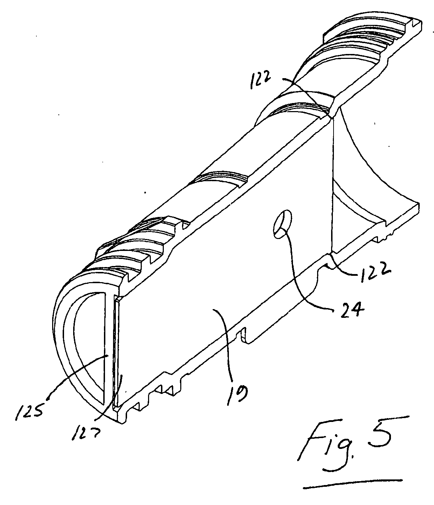

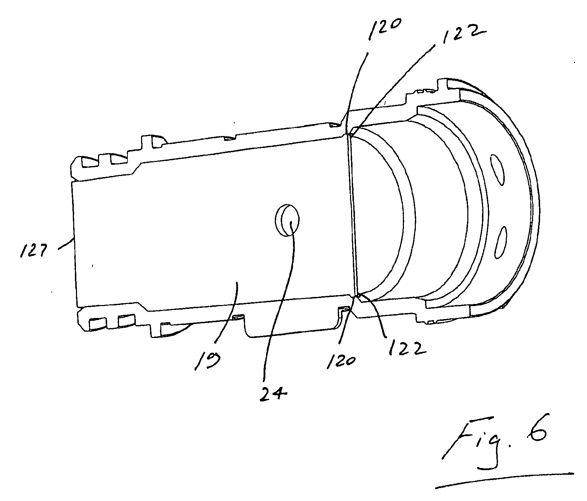

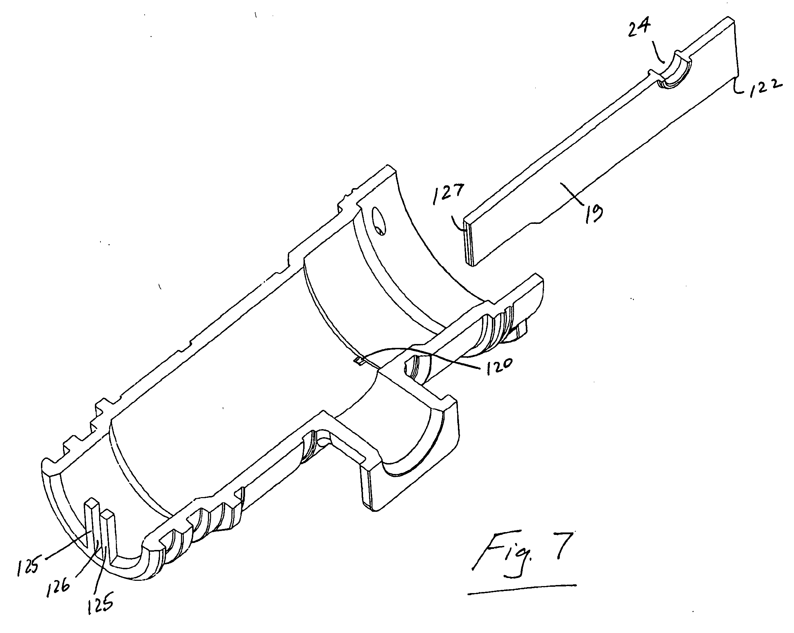

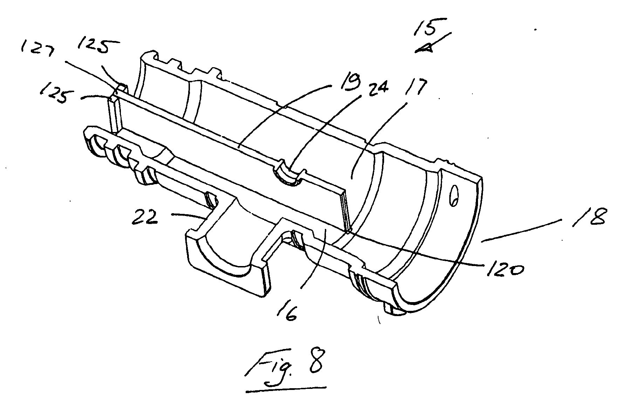

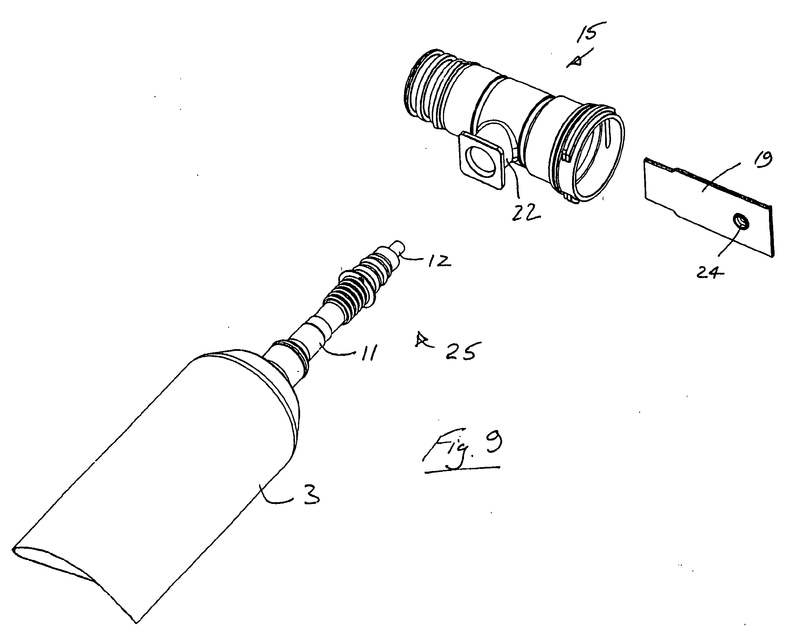

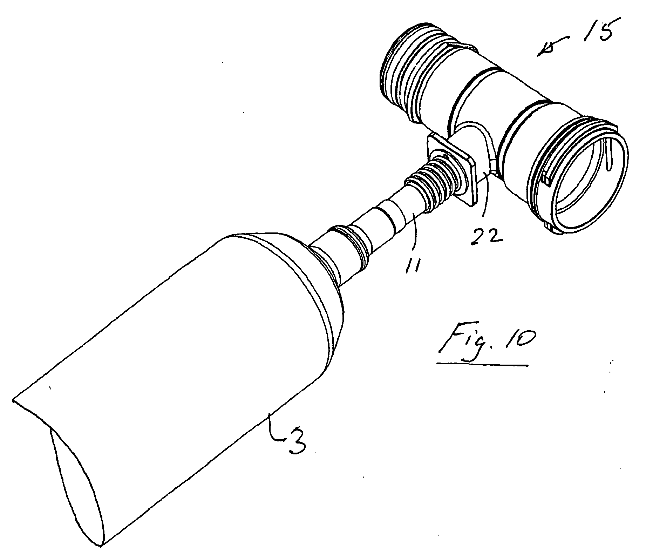

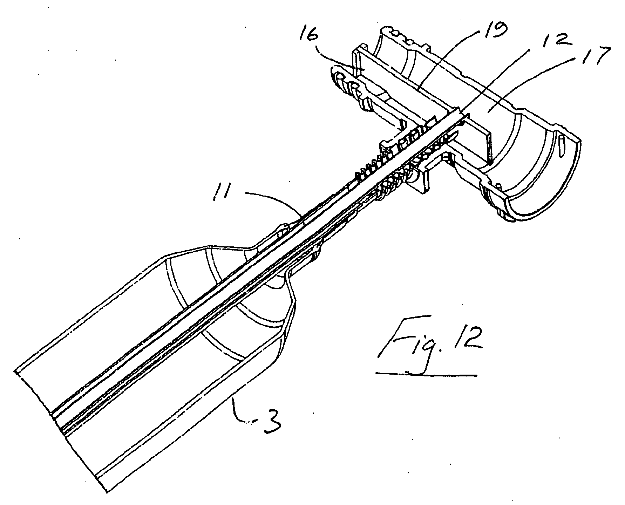

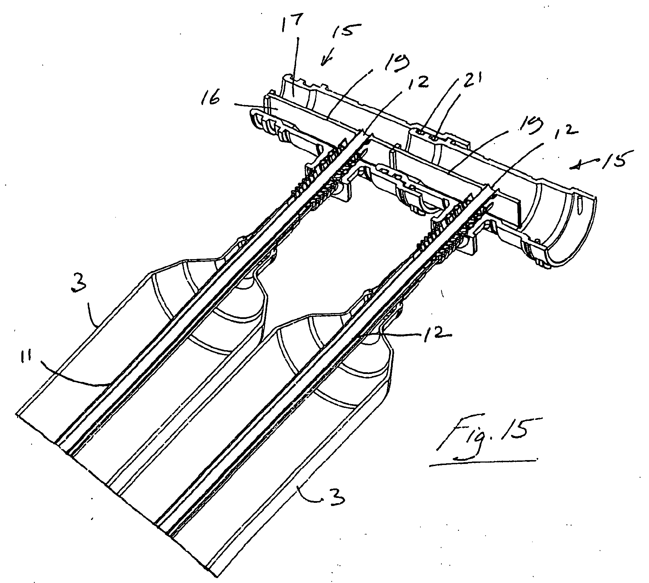

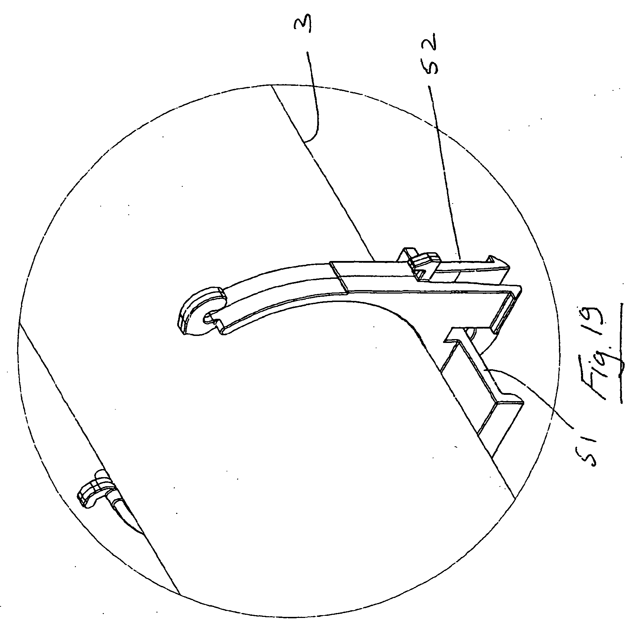

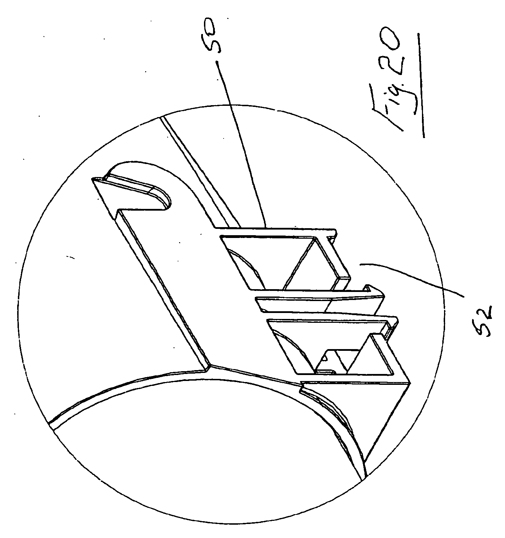

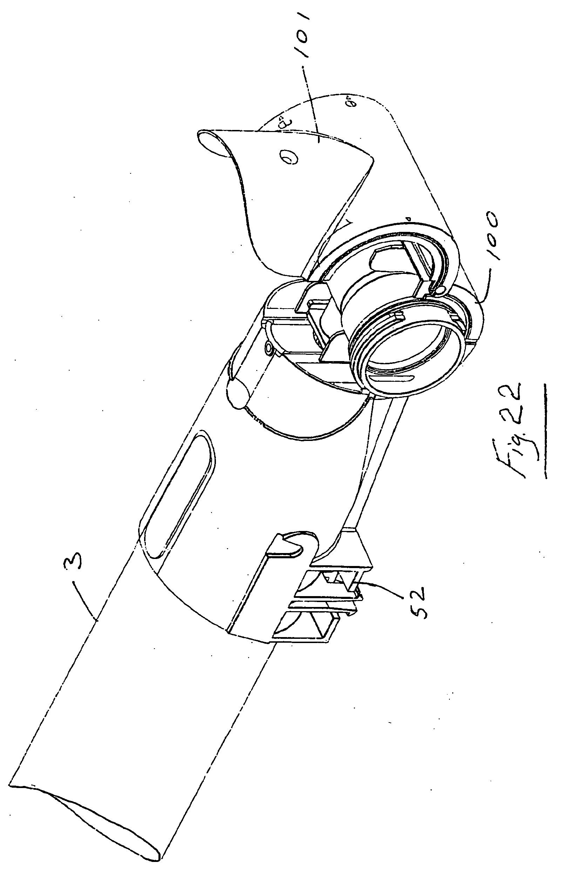

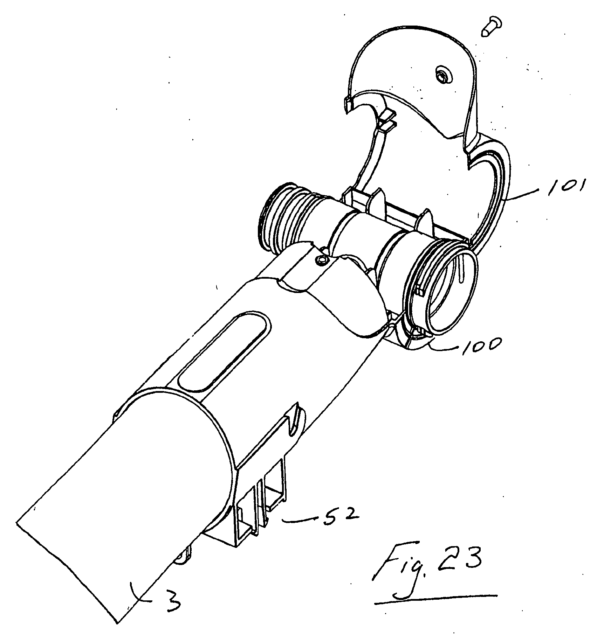

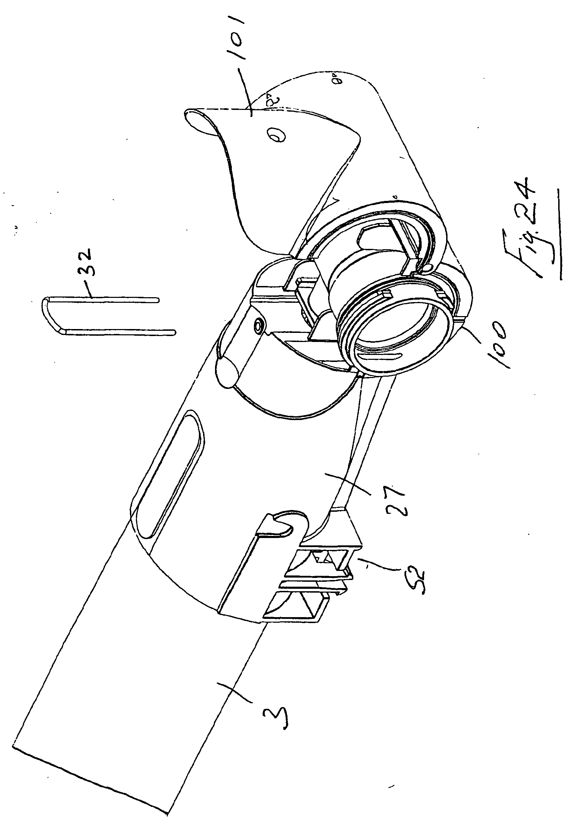

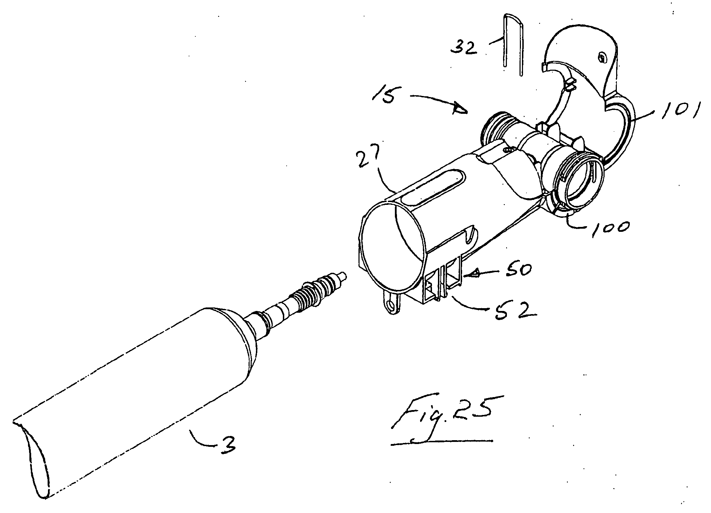

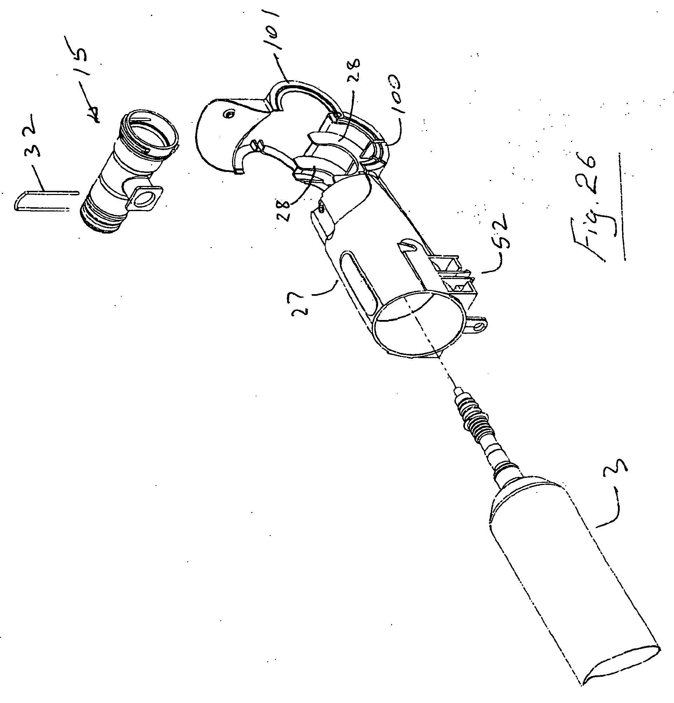

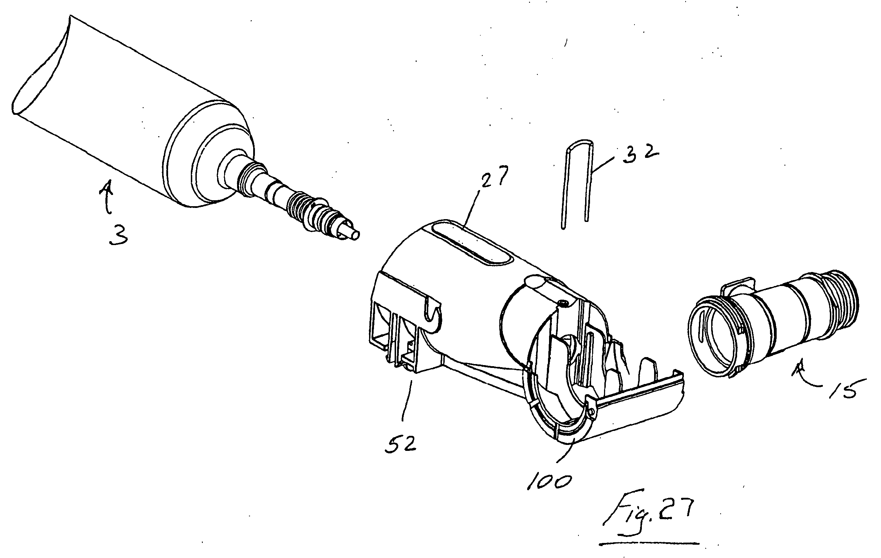

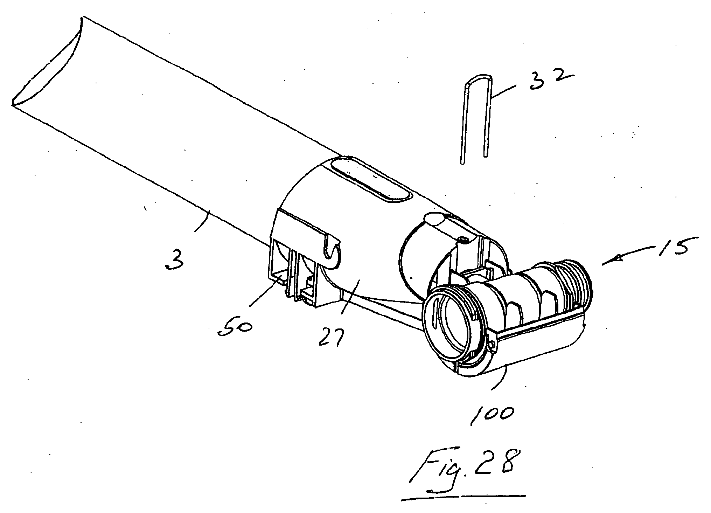

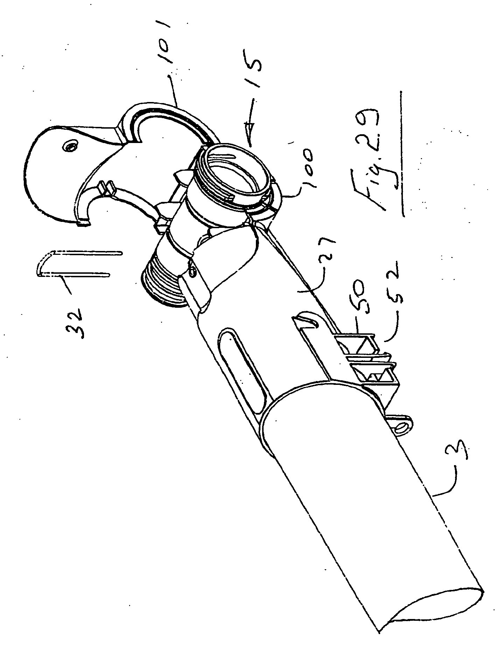

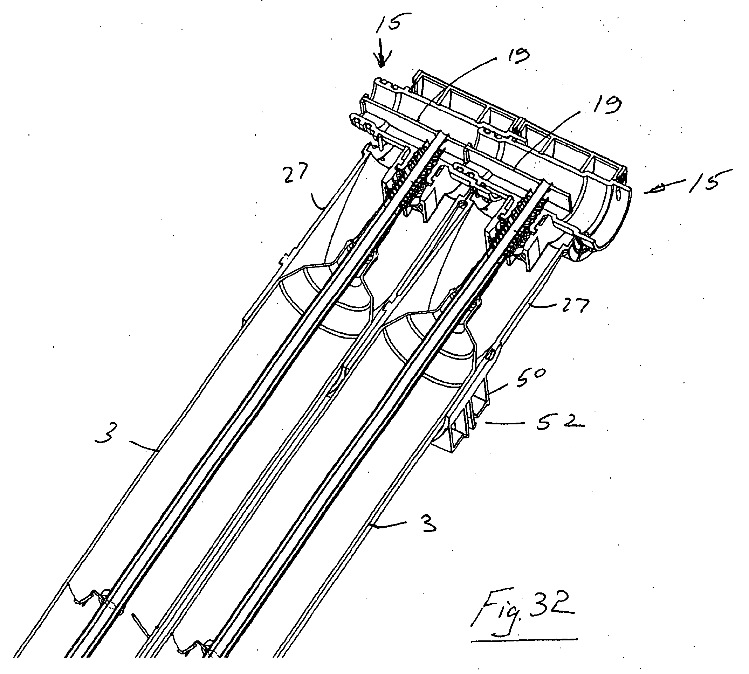

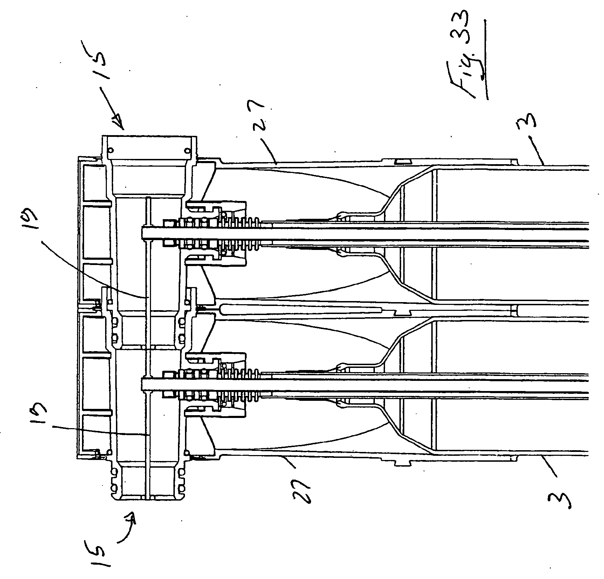

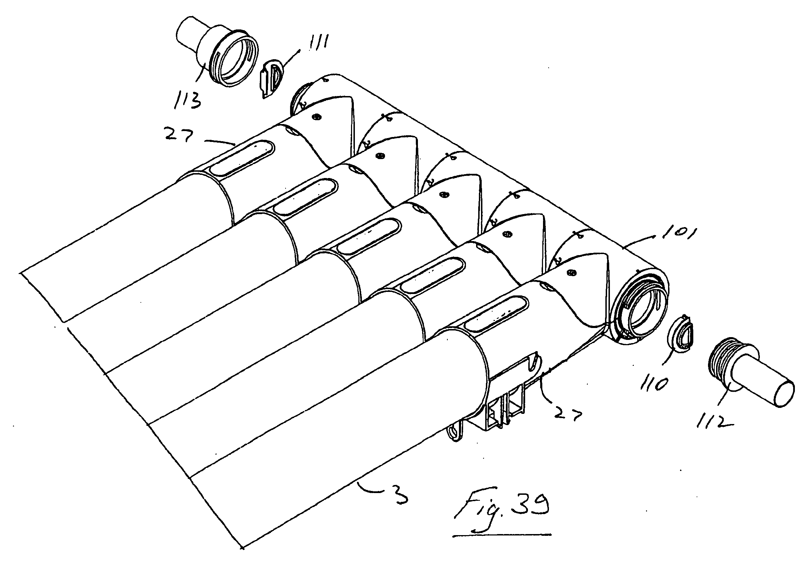

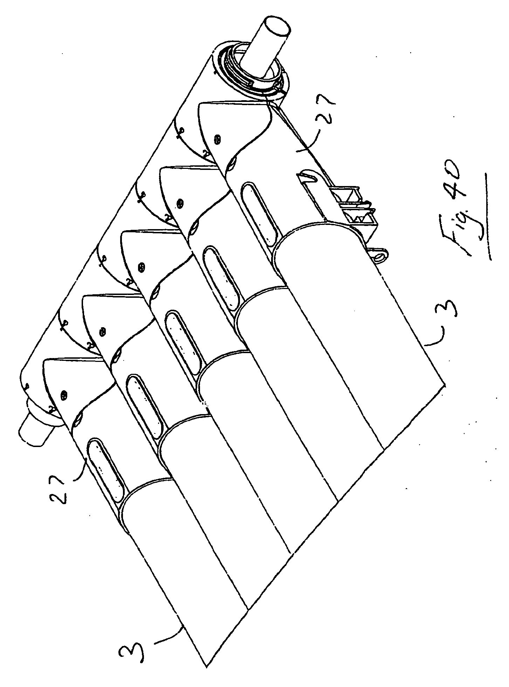

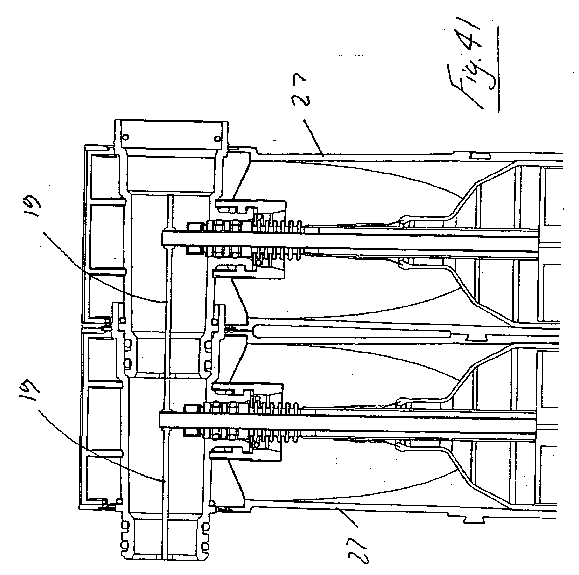

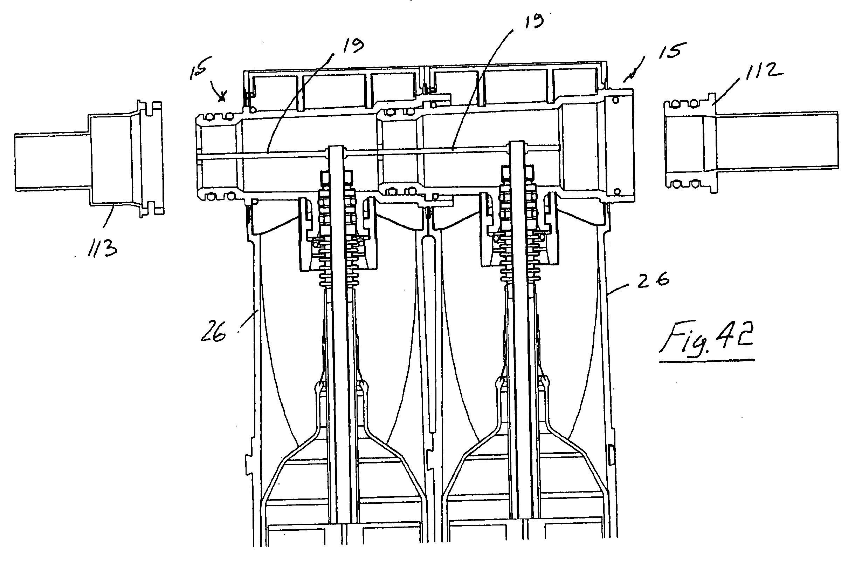

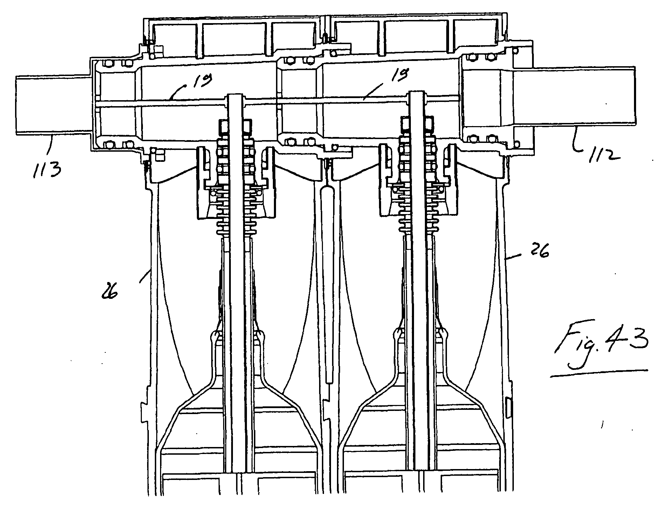

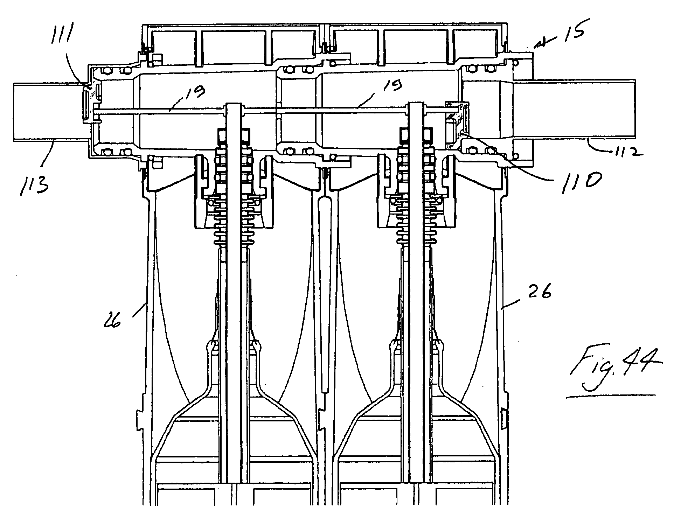

As illustrated in Fig 2 to Fig. 44 a solar collector assembly of the direct flow type comprises a solar absorbing tube 3 comprising an evacuated radiation transparent enclosure 8 enclosing an absorbing section 9, comprising a radiation absorbing plate 10 for absorbing solar radiation and an elongate tube 11, containing a working fluid (heat transfer medium), in thermal contact with said radiation absorbing plate 10. The elongate tube 11 contains a concentrically positioned inner pipe 12 thereby forming two concentric internal flow passageways 13, 14 for the flow of a fluid to be heated. The elongate tube 11 extends out of one end of the solar absorbing tube 3 and into an end fitting 15 wherein an annular outer passageway 13 of the elongate tube 11 communicates with a cold fluid inlet conduit stream 16 within the end fitting 15 and the inner passageway 14 of the elongate tube 11 communicates with a hot fluid outlet conduit stream 17 within the end fitting 15. Fluid passes from the annular outer passageway 13 to the inner passageway 14 via a flow path provided at a distal end of the elongate tube 11.

The end fitting 15 incorporates a tubular passage 18 having a central dividing wall 19 dividing the passage 18 into said cold fluid inlet conduit 16 and said hot fluid outlet conduit 17. The dividing wall 19 is provided with an opening 24 through which the hot fluid pipe 14 of the solar collector tube 3 extends for the delivery of hot fluid from the solar collector into the hot fluid passageway 17. To facilitate the manufacturability of the components of the end fitting 15 the central dividing wall 19 in this case is a removable component. The central dividing wall 19 in combination with the opening 24 as assembled in the end fitting 15 allows for the parallel flow of fluid through a multitude of solar collector tubes 3 that are adjacently connected to each other.

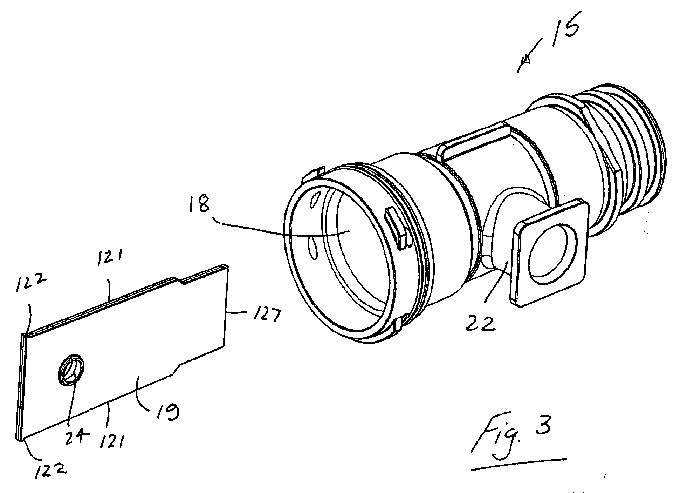

Referring to Figs. 3 to 10 there is illustrated an end fitting comprising a housing with a separate dividing wall insert 19. The dividing wall insert 19 forms a dual chamber component that facilitates parallel flow through all tubes in an assembled array. The separate dividing wall 19 facilitates ease of manufacture as the housing can be readily moulded and the dividing wall 19 can subsequently be inserted. On assembly, the dividing wall insert 19 engages in slots and/or grooves in the end fitting to retain it in situ.

In this case the end fitting 15 comprises a mounting means for mounting the dividing wall insert 19. The mounting means is a mechanical mounting means and comprises a longitudinal part which extends longitudinally along the end fitting. The longitudinal part comprises a pair of oppositely directed slots/grooves 120 in the inner surface of the end fitting which receive shoulders 122 in the longitudinal edges 121 of the dividing wall insert 19. The dividing wall is a push fit in the grooves 120.

The mounting means also comprises a transverse part which extends transversely across the end fitting 15, in this case at one end of the end fitting 15. The transverse part in this case comprises a pair of transverse support parts 125 which are spaced-apart to define a transverse receiving slot 126 therebetween. The slot 126 receives an end 127 of the dividing wall 19 to locate and retain the dividing wall 19, providing added stability whilst ensuring that the dividing wall insert 19 can be readily inserted and retained.

Because the dividing wall 19 is a separate component from the main body of the end fitting it can be manufactured separately thereby simplifying manufacturing. For example, the end fitting and separate dividing wall can be moulded from a temperature resistant polymeric material.

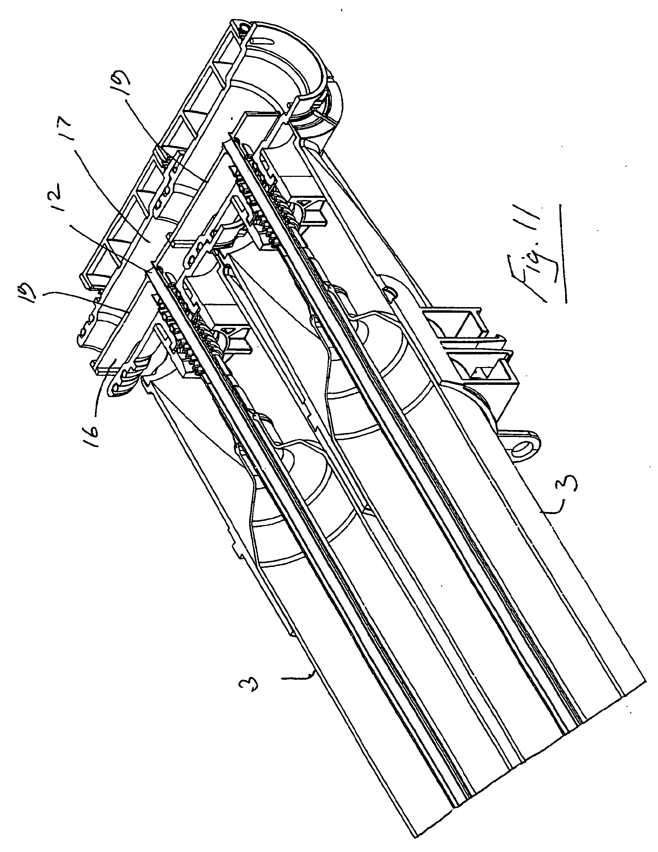

Fig. 11 and 14 to 16 illustrate the connection of two end fittings 15 connected to two solar tubes 3 of the direct flow type.

The tubular passage 18 extends transversely across the end fitting 15 and is open at each side of the end fitting whereby a fluid can flow between the tubular passages 18 of adjacent solar tubes 3. The open ends of the passages 18 comprise recesses to provide a circumferential seat 20 for an O-ring 21 or similar sealing means to provide a fluid-tight seal when adjacent end fittings 15 are connected together.

Each tubular passage 18 is provided with a receiving portion 22 extending orthogonally to the tubular passage 18 for receiving an end of the concentric elongated tube 11. One or more O-ring seals 23 are located within annular seats around the periphery of the pipe for providing a seal between the end of the pipe 11 and the pipe receiving portion 22.

The inner pipe 12 of the concentric elongate tube 11 defining said inner passageway 14 extends beyond the outer part to extend through an aperture 24 in the dividing wall 19 of the tubular passage 18 whereby the annular outer passageway 13 of the double walled pipe communicates with one side of the tubular passage 18, defining the cold fluid inlet stream 16, and the inner passageway 14 communicates with the other side of the tubular passage 18, defining the hot fluid outlet stream 17.

An end region of the outer wall of the double walled pipe 11 includes a flexible section 25 in the form of a corrugated or convoluted section of tube to provide a degree of flexibility to allow for slight misalignment of the pipe and to absorb shocks or impacts.

The end fitting 15 may be formed from a temperature resistant polymeric material, possibly by injection moulding.

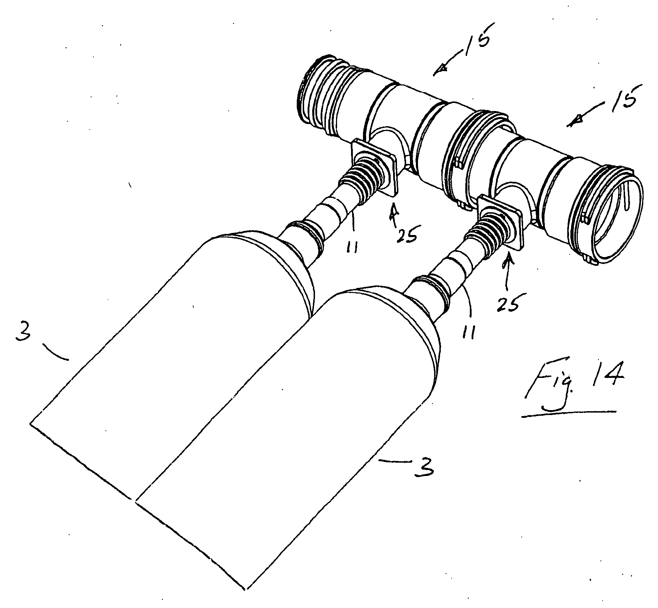

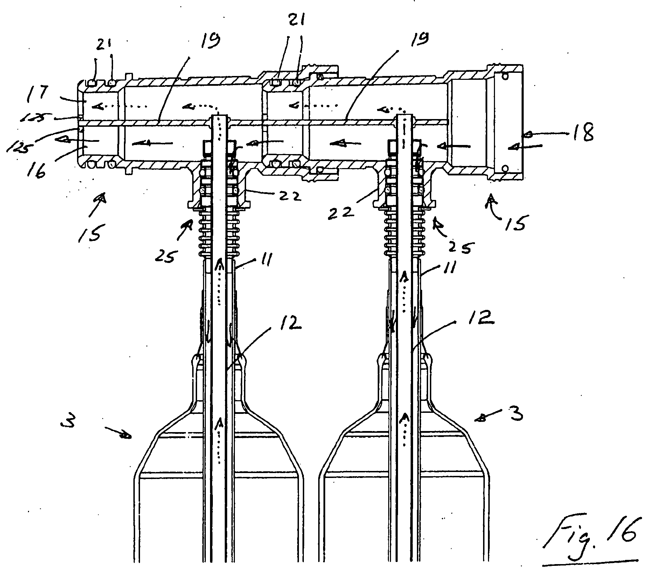

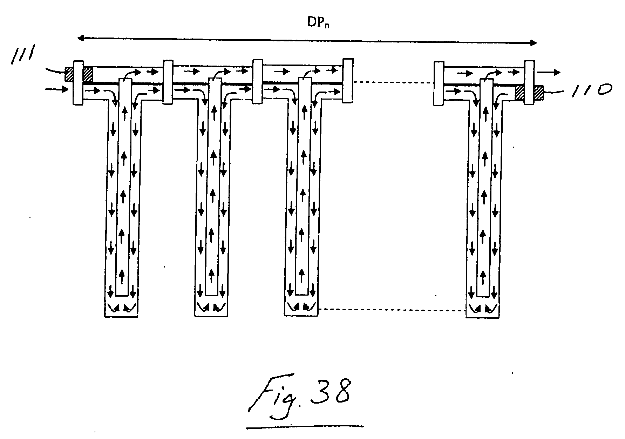

Figs. 14 to 16 show the connection of two end-fittings 15 connected to two solar tubes 3 of the direct flow type. The inlet flow channel 16 of one of the end fittings 15 communicates with the inlet flow channel 16 of the adjacent end fitting 15. In addition, the manner in which the outlet flow channel 17 communicates with the outlet flow channel in the adjacent end fitting 15 is also shown. The flow is illustrated in Fig. 16 in which the dotted line arrow indicates hot fluid flow and the full line arrow indicates cold fluid flow. The flow is also illustrated in Fig. 38.

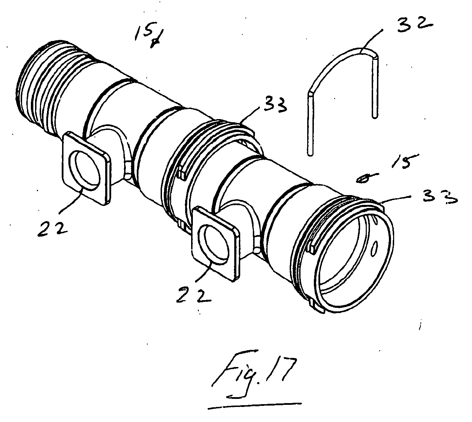

Fig. 17 illustrates one way for securing adjacent tubes 3 to one another during the installation of a collector using the current invention. A resilient clip 32 is located into two channels 33 on one side of the end fitting 15 that engage with a circumferential protrusion 34 on the opposite end of an adjacent end fitting 15 to provide a secure locking mechanism to withstand the high-pressure conditions that are normal in this field. Various other connection technologies that may be utilised include a twist lock fitting where an inclusion on one end-fitting 15 engages with an inclusion on an adjacent end fitting, or a clamp that engages with circumferential inclusions or protrusions on opposite faces of adjacent end-fittings in order to secure the two end fittings together.

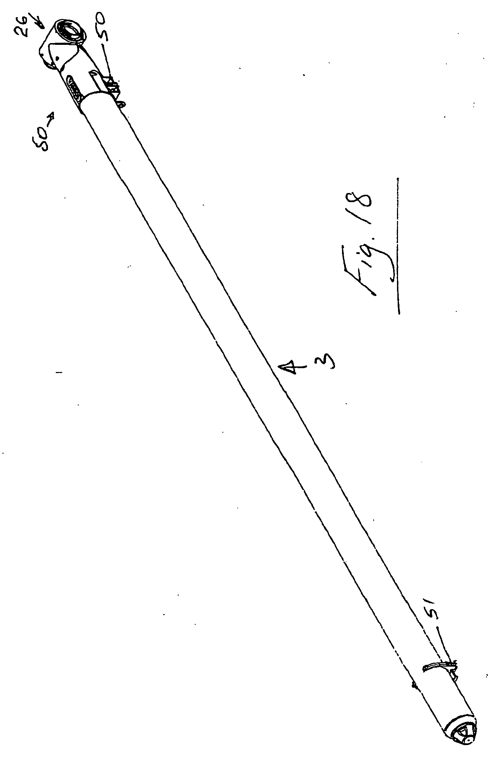

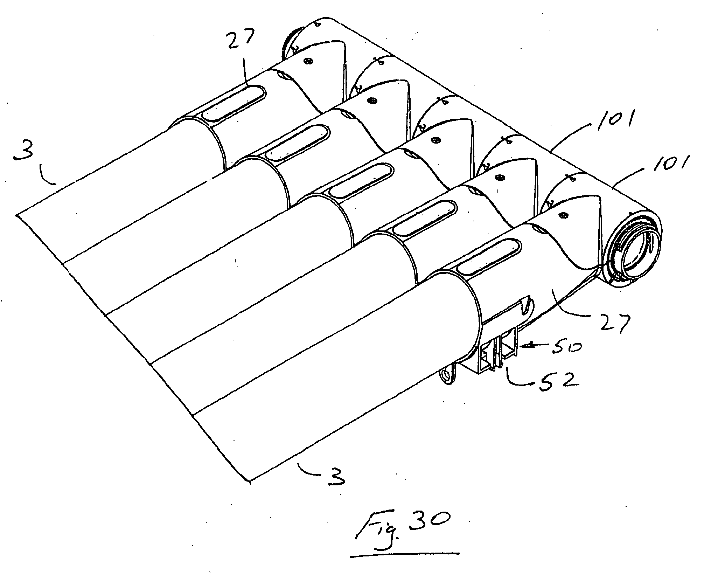

In one embodiment of the invention the end fitting 15 is encased in a protective enclosure 26 as shown in Figs. 18 to 34. In a first embodiment of the protective enclosure 26 this consists of a main body enclosure 27 that has an integral support structure 28. Additionally the protective enclosure is provided with a lid 101. A plurality of solar collector tubes incorporating the end fitting 15 and the protective enclosure 26 of the present invention are shown in Fig. 30.

Figs. 18 to 29 show by way of an example a schematic of a single tube of a first embodiment of the invention. When assembled the direct flow type and the heat pipe type will have the same external aesthetic appearance. The finished tube comprises an upper fitting 50, a solar tube 3 and a lower fitting 51. Preferentially both upper fitting 50 and lower fitting 51 are provided with channels 52 to allow for the attachment of supporting structures.

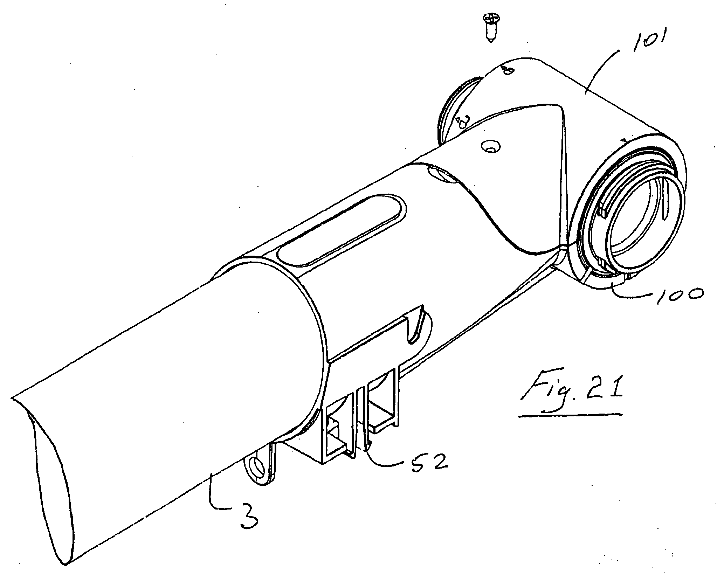

Referring in particular to Figs. 21 to 29 it will be noted that in this case the end cap for housing the end fitting comprises a fixed receiver portion 100 into which the end fitting is inserted and a lid part 101 which is hingedly mounted to the receiver portion 100. The lid part 101 is opened to receive the end fitting and after assembly the lid part 101 is closed to form a protective cover.

Figs. 30 to 44 further show the assembly of a number of tubes using the present invention to construct a solar collector.

The end fitting 15 fits into a protective enclosure 26 that comprises; a main body enclosure 27 (that includes an integrated structure for supporting the tube when installed), and a lid 101. A retaining clip 32 is provided to secure the tube into the end enclosure 26.

A tube 3, end fitting 15, and protective enclosure 26 are assembled as follows. The end fitting 15 is located into position in the main body enclosure 27. The fitting 15 is inserted with the tube receiving port 22 facing upwards and sliding the end fitting 15 horizontally into position in the main body enclosure 27. Once the end fitting 15 is in position it is rotated through ∼90 degrees until the tube receiving port 22 is facing the tube 3. The end fitting 15 will preferentially clip / lock into position by this 90 degree rotation action during assembly in the factory.

The tube is then inserted into the large open end of the main body enclosure 27 so that the flexible neck / condenser of the tube fits into the end fitting 15. Once the tube is inserted it is secured in position by the retaining clip 32. The retaining clip 32 engages with a disc that is inserted into the convolutions of the flexible bellow either on a direct flow or heat pipe tube when it is inserted to hold it in place. Once the retaining clip 32 is secured in place the tube cannot be removed from the main body enclosure 26 as the clip 32 is secured against an internal planar face of the main body enclosure thereby stopping the tube being removed.

Once the tube is secured in position the lid 101 is closed. The lid 101 can be opened so that should a tube 3 need to be removed at a later stage the lid 101 can pivot to an open position, thereby allowing access to the retaining clip 32 (so that is can be disengaged / removed) to allow the tube 3 to be removed from the main body enclosure 26.

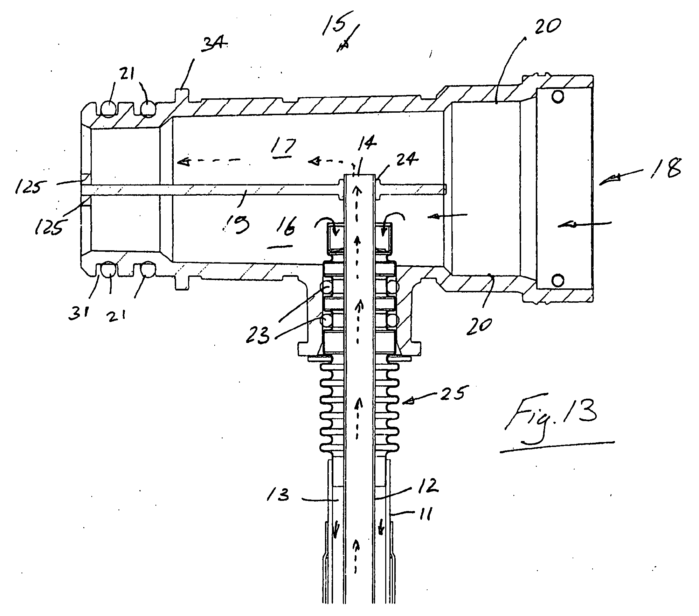

Fig. 18 shows how the finished tube would leave the factory. O-rings 21 would also be fitted in the grooves of 31 (see Fig. 13). It is also an option to ship tubes 3 pre-assembled in groups of 2 or more (ideally 5 or more).

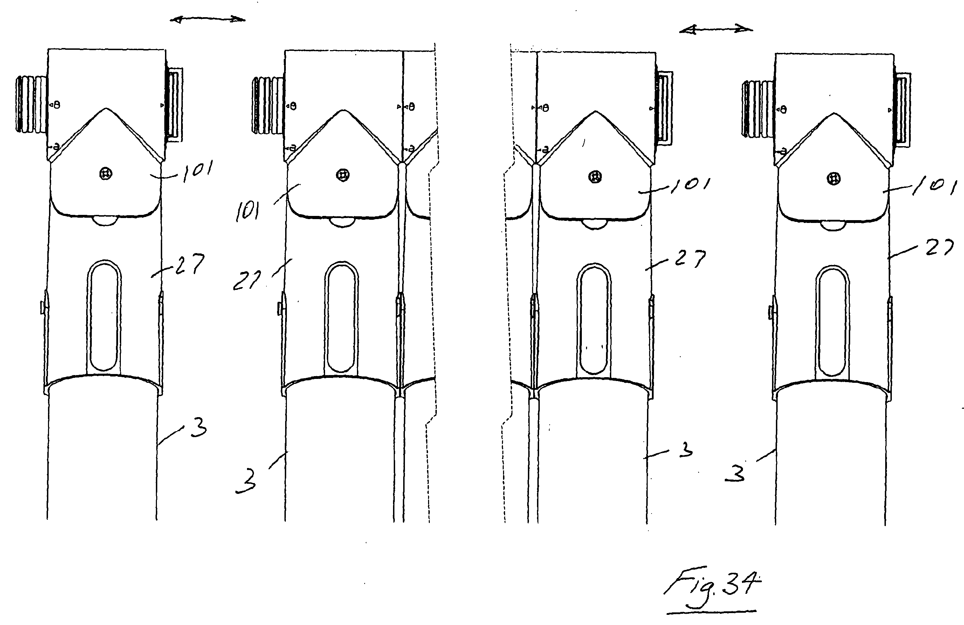

Figs. 34 to 35 show how the tubes may be connected together during installation as follows:

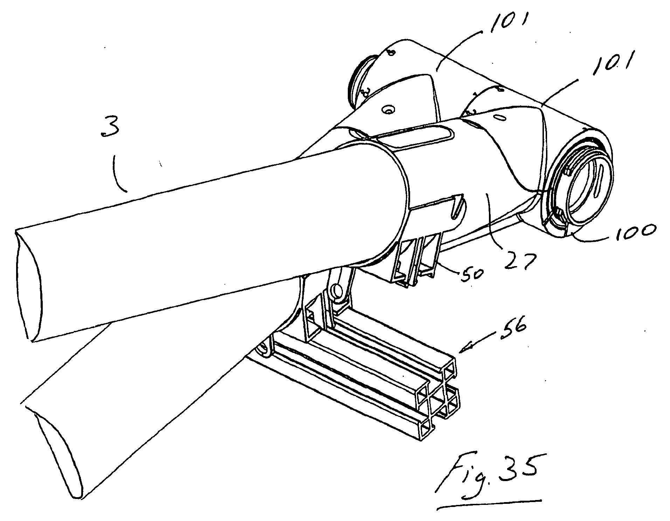

Fig. 35 shows how the tubes can be twist-locked together making use of protrusions / inclusions on the end-fitting 15. A twisting through approx. 20 degrees may be used to lock the tubes together.

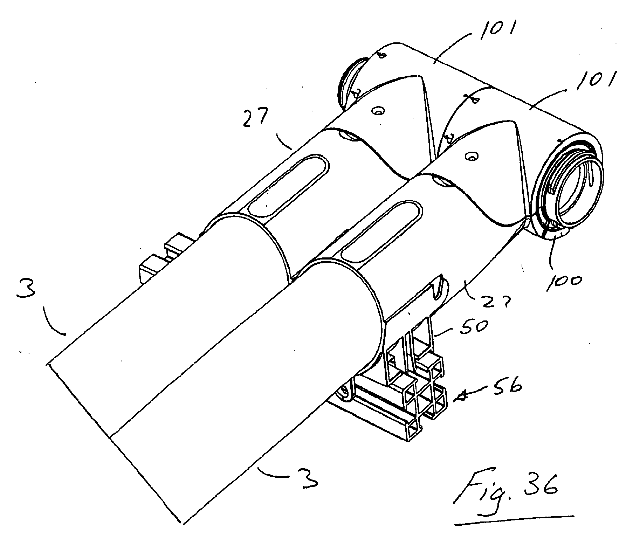

Fig. 36 shows tubes when locked into position on a rail support 65.

Fig. 30 shows a multitude of tubes connected together - the product could leave the factory pre-assembled as shown in Fig. 30 or as individual tubes that are assembled on-site in this manner by the installer.

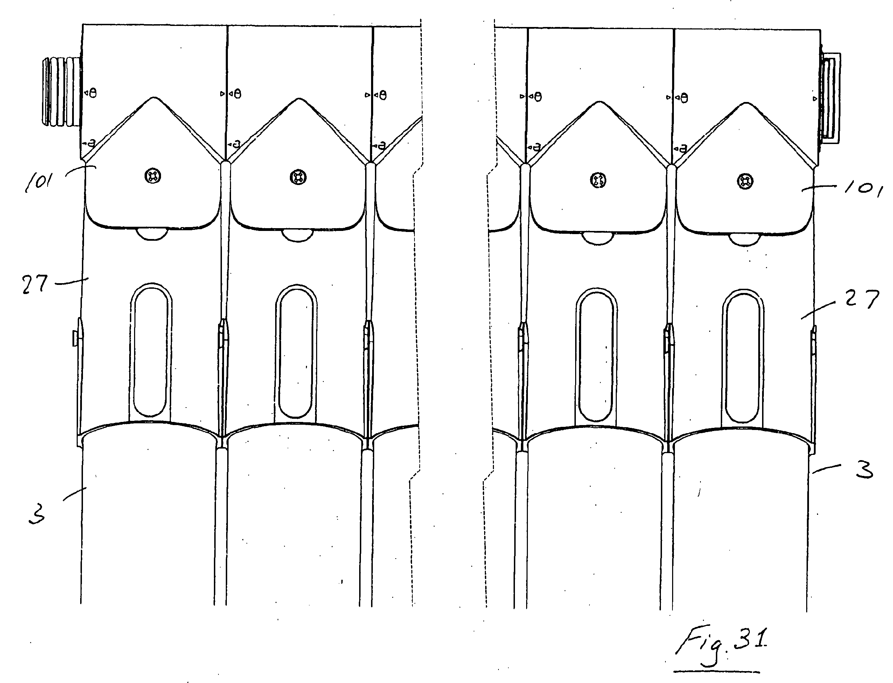

Tubes can be connected together in any quantity of 2 or more. Fig. 34 show a plurality of tubes before they are connected together and Fig. 31 shows the same tubes after they are connected.

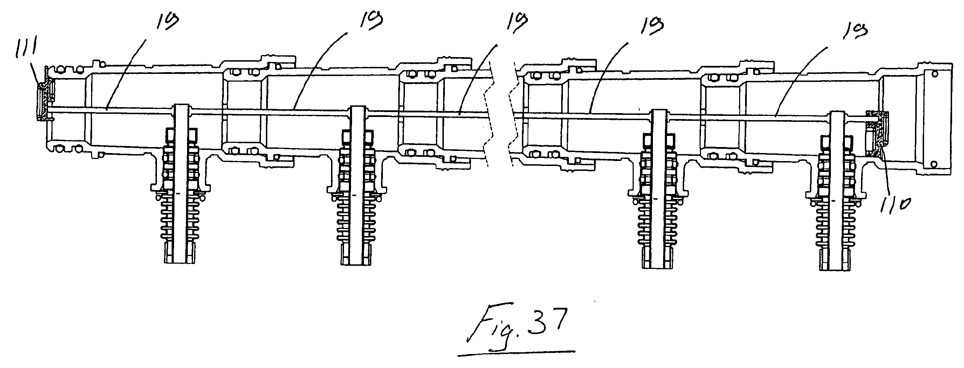

Referring to Figs. 37 to 44 there is illustrated an assembly of solar collector tubes with grommets 110, 111 and end fittings 112, 113. The fittings 112, 113 are typically of brass for connection with conventional piping. The grommets 110, 111 which are typically of a suitable rubber or plastics are used to ensure that there is only one flow channel in and one flow channel out from the solar collector assembly.

In addition to being modular in construction the solar collector of the invention provides hydraulic flow paths that facilitate a parallel flow of thermal fluid throughout the assembled collector array. The solar collector of the invention can be constructed with any number of solar tubes in series. The invention provides a parallel flow path through all tubes regardless of the size of the collector array and the size of which is not limited to the size, design and construction of the manifold. The schematic of Fig. 35 shows one embodiment of a modular collector that facilitates parallel flow by the hydraulic design of the flow paths and the insertion of flow channel plugs at each extremity of the collector array.

Various modifications and variations to the described embodiments of the inventions will be apparent to those skilled in the art without departing from the scope of the invention as defined in the appended claims. Although the invention has been described in connection with specific preferred embodiments, it should be understood that the invention as claimed should not be unduly limited to such specific embodiments.

## Claims

1. A solar collector comprising at least one elongate tube, said at least one elongate tube including means for absorbing solar radiation, means for transferring heat from said heat absorbing means to a fluid to be heated and an end fitting (15) providing fluid connection means for connection with a corresponding end fitting (15) of an adjacent elongate tube to permit passage of fluid between the end fittings (15) without requiring a separate manifold, the end fitting (15) comprising a fluid passageway (16, 17), the end fitting (15) being adapted to sealingly engage a similar passageway (16, 17) of an adjacent end fitting (15), the passageway (16, 17) being divided by a longitudinally extending dividing wall (19) into a cold fluid passageway (16) for a cold fluid stream and a hot fluid passageway (17) for a hot fluid stream **characterized in that** the dividing wall (19) is a separate component which is mounted in the passageway (16, 17).

2. A solar collector as claimed in claim 1 wherein the end fitting (15) comprises mounting means for the dividing wall (19).

3. A solar collector as claimed in claim 2 wherein the mounting means comprises a mechanical mounting means.

4. A solar collector as claimed in claim 2 or 3 wherein the mounting means comprises a receiver for reception of the dividing wall (19).

5. A solar collector as claimed in claim 4 wherein the receiver comprises a longitudinal part which extends longitudinally along the end fitting (15).

6. A solar collector as claimed in claim 5 wherein the longitudinal part comprises an elongate slot (120) extending along at least a portion of the end fitting.

7. A solar collector as claimed in claim 6 wherein the receiver comprises a pair of appositely directed elongate slots (120).

8. A solar collector as claimed in any of claims 4 to 7 wherein the receiver comprises a transverse part (125) which extends transversely at least partially across the end fitting (15).

9. A solar collector as claimed in claim 8 wherein the transverse part (125) comprises a support which extends transversely across the end fitting (15).

10. A solar collector as claimed in claim 9 wherein the transverse part (125) comprises a pair of supports (125) which are spaced-apart to define a transverse receiving slot (126) therebetween.

11. A solar collector as claimed in any of claims 8 to 10 wherein the transverse part (125) located at one end of the end fitting (15).

12. A solar collector as claimed in any of claims 1 to 11 wherein the end fitting (15) is of a rigid plastics material and the dividing wall (19) is also of a rigid plastic material.

13. A solar collector as claimed in any of claims 1 to 12 wherein the dividing wall (19) comprises an opening (24) through which a hot fluid pipe (12) of the solar collector tube extends for delivery of hot fluid from the elongate tube into the hot fluid passageway (16, 17).

14. A solar collector as claimed in any of claims 1 to 14 wherein the dividing wall (19) is removable from the fitting (15).

## Patentansprüche

1. Solarkollektor, der mindestens ein langgestrecktes Rohr aufweist, wobei das mindestens eine langgestreckte Rohr Mittel zum Absorbieren von Sonnenstrahlung aufweist, weiter Mittel zur Übertragung von Wärme von den Wärme absorbierenden Mitteln auf eine aufzuheizende Flüssigkeit und eine Endarmatur (15), die Strömungsmittelverbindungsmittel zur Verbindung mit einer entsprechenden Endarmatur (15) eines benachbarten langgestreckten Rohr vorsieht, um das Durchlaufen von Strömungsmittel zwischen den Endarmaturen (15) zu gestatten, ohne dass eine getrennte Sammelleitung erforderlich ist, wobei die Endarmatur (15) einen Strömungsmitteldurchlassweg (16, 17) aufweist, wobei die Endarmatur (15) ausgebildet ist, um in dichtender Weise mit einem ähnlichen Durchlassweg (16, 17) einer benachbarten Endarmatur (15) in Eingriff zu kommen, wobei der Durchlassweg (16, 17) durch eine sich in Längsrichtung erstreckende Unterteilungswand (19) in einen Durchlassweg (16) für kaltes Strömungsmittel für einen kalten Strömungsmittelfluss und einen Durchlassweg (17) für heißes Strömungsmittel für einen heißen Strömungsmittelfluss aufgeteilt ist,
**dadurch gekennzeichnet, dass** die Unterteilungswand (19) eine getrennte Komponente ist, die in dem Durchlassweg 16, 17 montiert ist.

2. Solarkollektor nach Anspruch 1, wobei die Endarmatur (15) Montagemittel für die Unterteilungswand (19) aufweist.

3. Solarkollektor nach Anspruch 2, wobei die Montagemittel mechanische Montagemittel aufweisen.

4. Solarkollektor nach Anspruch 2 oder 3, wobei die Montagemittel eine Aufnahmevorrichtung zum Aufnehmen der Unterteilungswand (19) aufweisen.

5. Solarkollektor nach Anspruch 4, wobei die Aufnahmevorrichtung einen langgestreckten Teil aufweist, der sich in Längsrichtung entlang der Endarmatur (15) erstreckt.

6. Solarkollektor nach Anspruch 5, wobei der langgestreckte Teil einen langgestreckten Schlitz (120) aufweist, der sich entlang zumindest eines Teils der Endarmatur erstreckt.

7. Solarkollektor nach Anspruch 6, wobei die Aufnahmevorrichtung ein Paar von passend ausgerichteten langgestreckten Schlitzen (120) aufweist.

8. Solarkollektor nach einem der Ansprüche 4 bis 7, wobei die Aufnahmevorrichtung einen Querteil (25) aufweist, der sich zumindest teilweise quer über die Endarmatur (15) erstreckt.

9. Solarkollektor nach Anspruch 8, wobei der Querteil (125) einen Träger aufweist, der sich quer über die Endarmatur (15) erstreckt.

10. Solarkollektor nach Anspruch 9, wobei der Querteil (125) ein Paar von Trägern (125) aufweist, die beabstandet sind, so dass sie einen Queraufnahmeschlitz (126) dazwischen definieren.

11. Solarkollektor nach einem der Ansprüche 8 bis 10, wobei der Querteil (125) an einem Ende der Endarmatur (15) angeordnet ist.

12. Solarkollektor nach einem der Ansprüche 1 bis 11, wobei die Endarmatur (15) aus einem starren Plastikmaterial ist, und wobei die Unterteilungswand (19) auch aus einem starren Plastikmaterial ist.

13. Solarkollektor nach einem der Ansprüche 1 bis 12, wobei die Unterteilungswand (19) eine Öffnung (24) aufweist, durch die sich ein Rohr (12) für heißes Strömungsmittel des Solarkollektorrohrs für die Lieferung von heißem Strömungsmittel aus dem langgestreckten Rohr in den Strömungsmitteldurchlassweg (16, 17) erstreckt.

14. Solarkollektor nach einem der Ansprüche 1-14, wobei die Unterteilungswand (19) aus der Armatur (15) entfernbar ist.

## Revendications

1. Capteur solaire comprenant au moins un tube allongé, ledit au moins un tube allongé comprenant des moyens pour absorber le rayonnement solaire, des moyens pour transférer de la chaleur à partir des moyens d'absorption de chaleur vers un fluide à chauffer et un raccord d'extrémité (15) assurant un moyen de connexion de fluide pour une connexion avec un raccord d'extrémité (15) correspondant d'un tube allongé adjacent pour permettre le passage de fluide entre les raccords d'extrémité (15) sans avoir besoin d'un collecteur séparé, le raccord d'extrémité (15) comprenant un passage de fluide (16, 17), le raccord d'extrémité (15) étant adapté à coopérer de façon étanche avec un passage similaire (16, 17) d'un raccord d'extrémité adjacent (15), le passage (16, 17) étant divisé par une paroi de division s'étendant longitudinalement (19) en un passage de fluide froid (16) pour un flux de fluide froid et un passage de fluide chaud (17) pour un flux de fluide chaud, **caractérisé en ce que** la paroi de division (19) est un composant séparé qui est monté dans le passage (16, 17) .

2. Capteur solaire selon la revendication 1, dans lequel le raccord d'extrémité (15) comprend des moyens de montage pour la paroi de division (19).

3. Capteur solaire selon la revendication 2, dans lequel les moyens de montage comprennent des moyens de montage mécanique.

4. Capteur solaire selon la revendication 2 ou 3, dans lequel les moyens de montage comprennent un récepteur pour recevoir la paroi de division (19).

5. Capteur solaire selon la revendication 4, dans lequel le récepteur comprend une partie longitudinale qui s'étend longitudinalement le long du raccord d'extrémité (15).

6. Capteur solaire selon la revendication 5, dans lequel la partie longitudinale comprend une fente allongée (120) s'étendant le long d'au moins une portion du raccord d'extrémité.

7. Capteur solaire selon la revendication 6, dans lequel le récepteur comprend une paire de fentes allongées orientées de façon pertinente (120).

8. Capteur solaire selon l'une quelconque des revendications 4 à 7, dans lequel le récepteur comprend une partie transversale (125) qui s'étend transversalement au moins partiellement à travers le raccord d'extrémité (15).

9. Capteur solaire selon la revendication 8, dans lequel la partie transversale (125) comprend un support qui s'étend transversalement à travers le raccord d'extrémité (15).

10. Capteur solaire selon la revendication 9, dans lequel la partie transversale (125) comprend une paire de supports (125) qui sont espacés pour définir une fente de réception transversale (126) entre eux.

11. Capteur solaire selon l'une quelconque des revendications 8 à 10, dans lequel la partie transversale (125) est située à une extrémité du raccord d'extrémité (15).

12. Capteur solaire selon l'une quelconque des revendications 1 à 11, dans lequel le raccord d'extrémité (15) est en matière plastique rigide et la paroi de division (19) est aussi en matière plastique rigide.

13. Capteur solaire selon l'une quelconque des revendications 1 à 12, dans lequel la paroi de division (19) comprend une ouverture (24) par laquelle passe un tuyau de fluide chaud (12) du tube de capteur solaire pour fournir du fluide chaud à partir du tube allongé dans le passage de fluide chaud (16, 17).

14. Capteur solaire selon l'une quelconque des revendications 1 à 14, dans lequel la paroi de division (19) peut être retirée du raccord (15).
